# EUROPEAN PATENT APPLICATION

(11) **EP 4 546 536 A1**
(43) Date of publication of application: **30.04.2025**
(21) Application number: 24169965.1
(22) Date of filing: 12.04.2024
(51) Int. Cl.: H01M 50/333, F16K 17/02, F16K 24/04

(54) **VENTING DEVICE AND BATTERY PACK WITH THE SAME**

(30) Priority: 23.10.2023 KR 20230141648
(71) Applicant: Samsung SDI Co., Ltd., Yongin-si, Gyeonggi-do 17084 (KR)
(72) Inventor: KIM, Hyun, 16678 Suwon-si (KR)
(74) Representative: Marks & Clerk LLP

(57) **Abstract**

A venting device including: a cover positioned at one side of a wall having a vent hole, through which a gas is able to move, formed therein to cover the vent hole; a connection pin configured to pass through the wall and have one side connected to the cover; and a hook positioned at the other side of the wall and connected to the other side of the connection pin so that the cover and the connection pin are supported by the wall.

## Description

### BACKGROUND

### 1. Field

The present invention relates to a venting device and a battery pack including the same.

### 2. Discussion of Related Art

A plurality of battery cells are accommodated in a housing of a battery pack. In charging and discharging processes of the plurality of battery cells or due to an impact applied from the outside, a gas containing an inflammable substance may be released from inside the battery cells to a space inside the housing.

When the space inside the housing is filled with a gas containing an inflammable substance, the battery pack may be deformed or damaged, or explode. Therefore, there is a need for a venting device that can release the gas inside the battery pack to the outside and lower the pressure inside the battery pack.

The above information disclosed in this Background section is provided for enhancement of understanding of the background of the present disclosure, and, therefore, it may contain information that does not constitute related or prior art.

### SUMMARY

The present invention is directed to a venting device, which allows a gas to be released to the outside of a battery pack in response to an increase in a pressure inside the battery pack and prevents outside air from entering the battery pack in response to a decrease in the pressure inside the battery pack that is caused by the release of the gas, and a battery pack including the venting device.

These and other aspects and features of the present disclosure will be described in or will be apparent from the following description of some embodiments of the present disclosure.

According to an aspect of the present invention, there is provided a venting device including: a cover positioned at one side of a wall having a vent hole, through which a gas is able to move, formed therein to cover the vent hole; a connection pin configured to pass through the wall and have one side connected to the cover; and a hook positioned at the other side of the wall and connected to the other side of the connection pin so that the cover and the connection pin are supported by the wall.

The cover may include a central portion coupled to the connection pin and an outer circumferential portion configured to expand radially from the central portion and come in close contact with one side surface of the wall to block movement of the gas through the vent hole.

In a case where other-side pressure of the other side of the wall is higher than one-side pressure of the one side of the wall, and a pressure difference between the other-side pressure and the one-side pressure is greater than a cover deformation critical pressure, the cover may be elastically deformed so that the outer circumferential portion is spaced from the one side surface of the wall.

In a case where the other-side pressure of the other side of the wall is higher than the one-side pressure of the one side of the wall, and the pressure difference between the other-side pressure and the one-side pressure is greater than a hook deformation critical pressure, the hook may be elastically deformed so that the connection pin moves to the one side of the wall and the outer circumferential portion of the cover is spaced from the one side surface of the wall.

In a case where the other-side pressure of the other side of the wall is higher than the one-side pressure of the one side of the wall, and the pressure difference between the other-side pressure and the one-side pressure is greater than a connection pin deformation critical pressure, the connection pin may be elastically deformed so that a length of the connection pin extends and the outer circumferential portion of the cover is spaced from the one side surface of the wall.

The connection pin may include a cover coupling portion coupled to the cover, a hook coupling portion coupled to the hook, and an intermediate deformation portion positioned between the cover coupling portion and the hook coupling portion and having one side coupled to the cover coupling portion and the other side coupled to the hook coupling portion.

The intermediate deformation portion may include a plurality of wires bent to be elastically deformable in an unbending direction.

The intermediate deformation portion may include a coil spring.

According to another aspect of the present invention, there is provided a battery pack including: a housing configured to limit an inner space and having a vent hole, through which a gas is able to move, formed therein; at least one battery cell accommodated in the inner space; and a venting device including a cover positioned to cover the vent hole from an outer side of the housing, a connection pin configured to pass through the housing and have one side connected to the cover, and a hook positioned at an inner side of the housing and connected to the other side of the connection pin so that the cover and the connection pin are supported by the housing.

The cover may include a central portion coupled to the connection pin and an outer circumferential portion configured to expand radially from the central portion and come in close contact with an outer surface of the housing to block movement of the gas through the vent hole.

In a case where an internal pressure of the inner side of the housing is higher than an external pressure of the outer side of the housing, and a pressure difference between the internal pressure and the external pressure is greater than a cover deformation critical pressure, the cover may be elastically deformed so that the outer circumferential portion is spaced from the outer surface of the housing.

A separation distance between the outer surface and the outer circumferential portion may increase with an increase in the difference between the internal pressure and the external pressure.

In a case where the internal pressure of the inner side of the housing is higher than the external pressure of the outer side of the housing, and the pressure difference between the internal pressure and the external pressure is greater than a hook deformation critical pressure, the hook may be elastically deformed so that the connection pin moves to the outer side of the housing and the outer circumferential portion of the cover is spaced from the outer surface of the housing.

In a case where the internal pressure is higher than the external pressure, and the pressure difference between the internal pressure and the external pressure is greater than the cover deformation critical pressure, the cover may be elastically deformed so that the outer circumferential portion is spaced from the outer surface of the housing, and the hook deformation critical pressure may be higher than the cover deformation critical pressure.

The hook may include a plurality of elastic spokes each having one side coupled to the connection pin and the other side in contact with an inner surface of the housing.

A plurality of spoke guide grooves recessed to prevent detachment of a tip of each of the plurality of elastic spokes and extending radially about the connection pin may be formed in the inner surface of the housing.

In a case where the internal pressure of the inner side of the housing is higher than the external pressure of the outer side of the housing, and the pressure difference between the internal pressure and the external pressure is greater than a connection pin deformation critical pressure, the connection pin may be elastically deformed so that a length of the connection pin extends and the outer circumferential portion of the cover is spaced from the outer surface of the housing.

In a case where the internal pressure is higher than the external pressure, and the pressure difference between the internal pressure and the external pressure is greater than the cover deformation critical pressure, the cover may be elastically deformed so that the outer circumferential portion is spaced from the outer surface of the housing, and the connection pin deformation critical pressure may be lower than the cover deformation critical pressure.

The vent hole may be provided as a plurality of vent holes, and the plurality of vent holes may be arranged so that a vent hole with a smaller inner diameter size is positioned closer to the connection pin.

An elastic coefficient of the cover may be higher than an elastic coefficient of the connection pin and lower than an elastic coefficient of the hook.

At least some of the above and other features of the invention are set out in the claims.

A venting device of the present invention is elastically deformed and allows a gas to be released to the outside of a battery pack in response to an increase in a pressure inside the battery pack and is elastically restored and prevents outside air from entering the battery pack in response to a decrease in the pressure inside the battery pack that is caused by the release of the gas. Therefore, a thermal runaway phenomenon in which fire inside a battery pack expands due to air entering the battery pack from outside the battery pack is prevented.

In a venting device according to an embodiment of the present invention that includes an elastically deformable cover, an elastically deformable hook, and an elastically deformable connection pin, a range in which elastic restoration is possible for a separation distance between a housing and a cover of a battery pack can be significantly expanded. Therefore, even in a case where a pressure difference between an internal pressure and an external pressure of the battery pack sharply increases, the cover can widely open to allow a gas to be rapidly discharged from the inside of the battery pack to the outside, and when the pressure difference between the internal pressure and the external pressure of the battery pack decreases, the cover can be reliably closed to prevent the thermal runaway phenomenon.

However, the effects obtainable through the present disclosure are not limited to the above effects, and other technical effects that are not mentioned will be clearly understood by those skilled in the art from the following description of the present disclosure.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view of a battery pack according to one embodiment of the present invention;
FIG. 2 is a perspective view of a venting device according to a first embodiment of the present invention that is viewed from the outside and illustrates a state in which the venting device is separated from a wall of a housing of FIG. 1;
FIG. 3 is a perspective view of the venting device according to the first embodiment of the present invention that is viewed from the inside and illustrates a state in which the venting device is separated from the wall of the housing of FIG. 1;
FIG. 4 is a longitudinal cross-sectional view of the venting device according to the first embodiment of the present invention and illustrates a state in which, while the venting device is installed at the wall of the housing of FIG. 1, an outer circumferential portion of a cover is in close contact with the wall of the housing;
FIG. 5 is a longitudinal cross-sectional view of the venting device according to the first embodiment of the present invention and illustrates a state in which, while the venting device is installed at the wall of the housing of FIG. 1, a connection pin is elastically deformed;
FIG. 6 is a longitudinal cross-sectional view of the venting device according to the first embodiment of the present invention and illustrates a state in which, while the venting device is installed at the wall of the housing of FIG. 1, the connection pin and the cover are elastically deformed;
FIG. 7 is a longitudinal cross-sectional view of the venting device according to the first embodiment of the present invention and illustrates a state in which, while the venting device is installed at the wall of the housing of FIG. 1, the connection pin, the cover, and a hook are elastically deformed;
FIG. 8 is a plan view of an inner surface of the wall of the housing of FIG. 3 that is illustrated so that vent holes and spoke guide grooves are visible;
FIG. 9 is a longitudinal cross-sectional view of a venting device according to a second embodiment of the present invention and illustrates a state in which, while the venting device is installed at the wall of the housing of FIG. 1, an outer circumferential portion of a cover is in close contact with the wall of the housing; and
FIG. 10 is a longitudinal cross-sectional view of the venting device according to the second embodiment of the present invention and illustrates a state in which, while the venting device is installed at the wall of the housing of FIG. 1, a connection pin is elastically deformed.

### DETAILED DESCRIPTION OF EMBODIMENTS

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way.

The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of' and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, overcharge, over-current protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

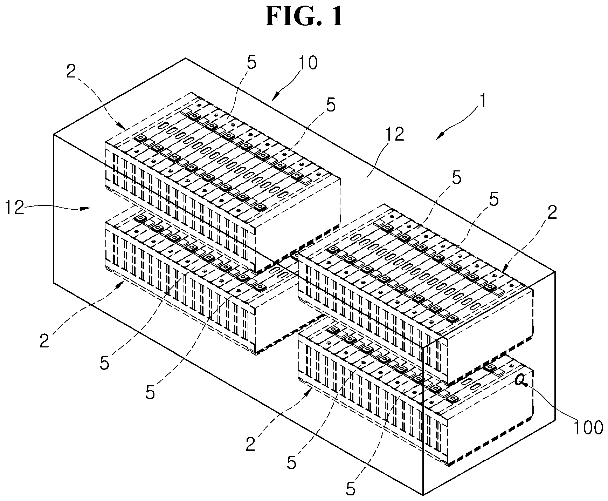

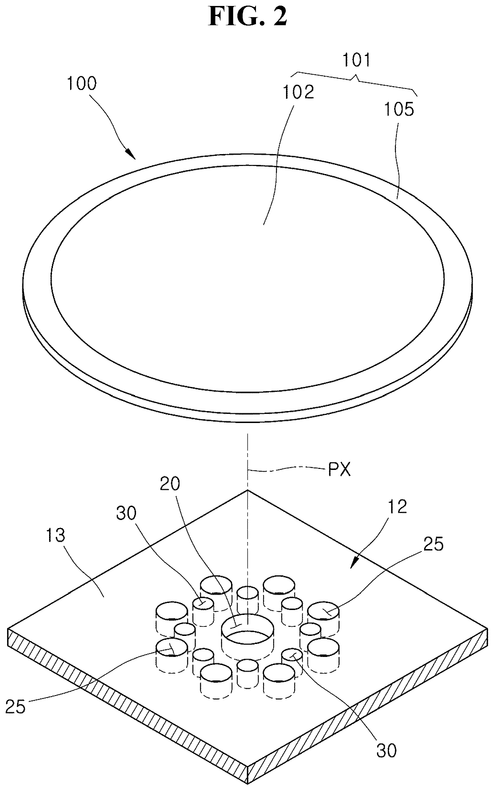

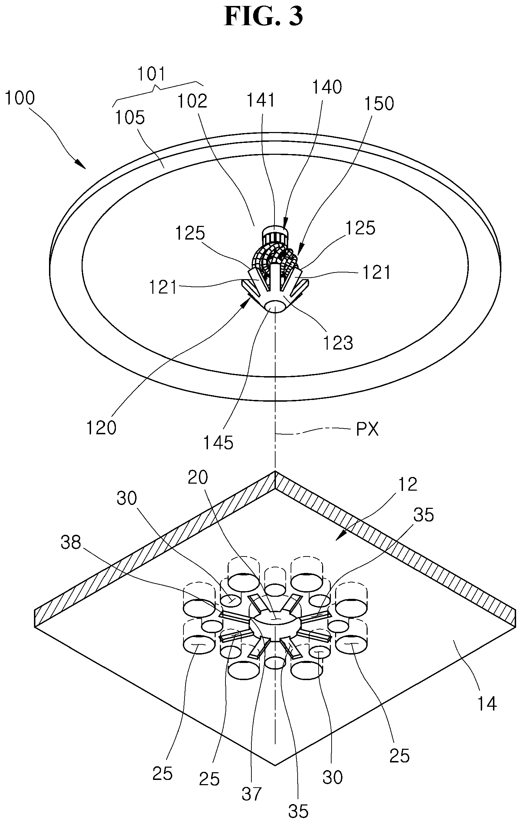

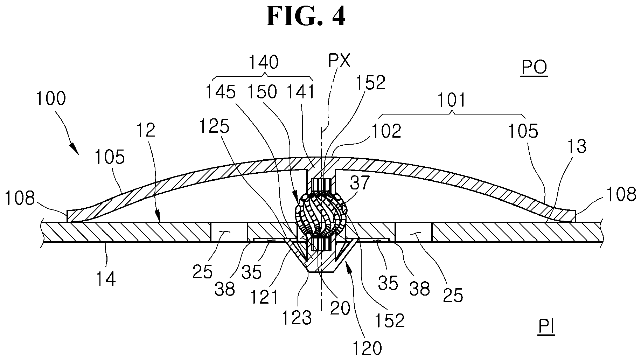

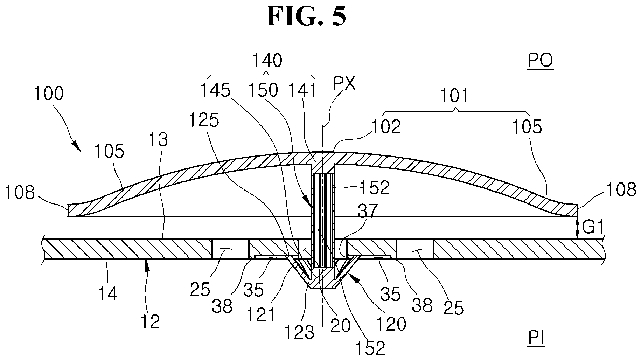

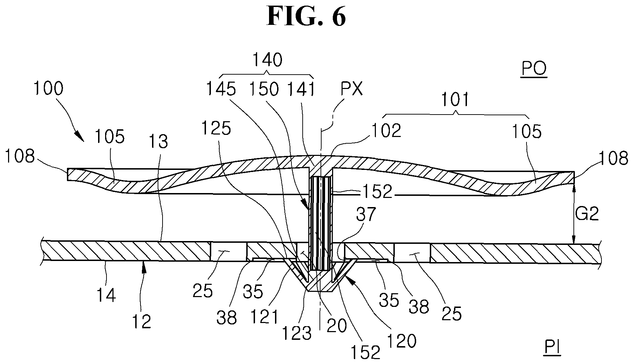

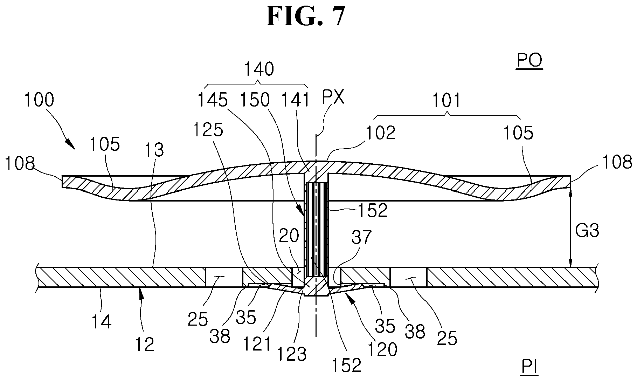

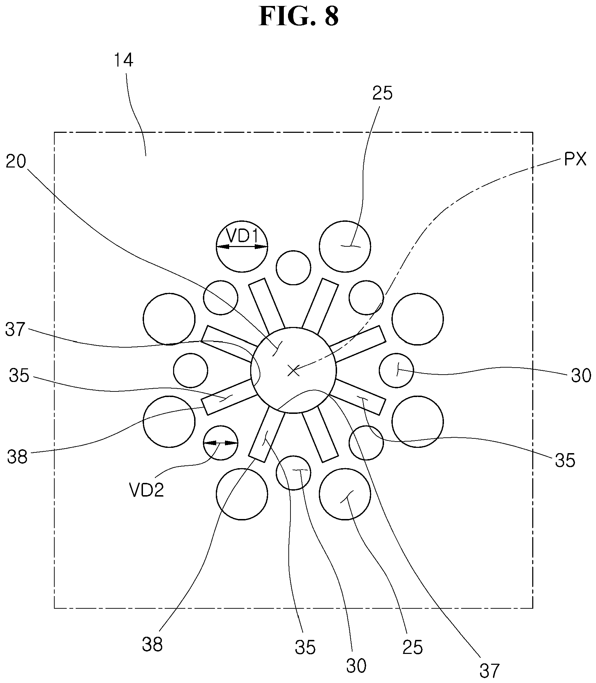

FIG. 1 is a perspective view of a battery pack according to one embodiment of the present invention, FIG. 2 is a perspective view of a venting device according to a first embodiment of the present invention that is viewed from the outside and illustrates a state in which the venting device is separated from a wall of a housing of FIG. 1, FIG. 3 is a perspective view of the venting device according to the first embodiment of the present invention that is viewed from the inside and illustrates a state in which the venting device is separated from the wall of the housing of FIG. 1, FIG. 4 is a longitudinal cross-sectional view of the venting device according to the first embodiment of the present invention and illustrates a state in which, while the venting device is installed at the wall of the housing of FIG. 1, an outer circumferential portion of a cover is in close contact with the wall of the housing, FIG. 5 is a longitudinal cross-sectional view of the venting device according to the first embodiment of the present invention and illustrates a state in which, while the venting device is installed at the wall of the housing of FIG. 1, a connection pin is elastically deformed, FIG. 6 is a longitudinal cross-sectional view of the venting device according to the first embodiment of the present invention and illustrates a state in which, while the venting device is installed at the wall of the housing of FIG. 1, the connection pin and the cover are elastically deformed, FIG. 7 is a longitudinal cross-sectional view of the venting device according to the first embodiment of the present invention and illustrates a state in which, while the venting device is installed at the wall of the housing of FIG. 1, the connection pin, the cover, and a hook are elastically deformed, and FIG. 8 is a plan view of an inner surface of the wall of the housing of FIG. 3 that is illustrated so that vent holes and spoke guide grooves are visible.

Referring to FIGS. 1 to 8, a battery pack 1 according to one embodiment of the present invention includes a housing 10, a plurality of battery modules 2, and a venting device 100. The housing 10 may include a plurality of walls 12 configured to limit an inner space. The housing 10 illustrated in FIG. 1 has a substantially rectangular parallelepiped shape and includes six walls each having a rectangular shape in a plan view. However, the shape of the housing 10 illustrated in FIG. 1 is only illustrative, and the housing may also be provided in a different shape.

The plurality of battery modules 2 are accommodated in the inner space of the housing 10. Each battery module 2 includes a plurality of battery cells 5 that can be charged and discharged. The venting device 100 is a venting device according to the first embodiment of the present invention and is installed on one of the plurality of walls 12 of the housing 10.

A connection pin through-hole 20 and a plurality of vent holes 25 and 30 may be formed to pass through the wall 12 in one of the plurality of walls 12. A connection pin 140 of the venting device 100 may pass through the wall 12 through the connection pin through-hole 20. Accordingly, the venting device 100 may be installed at the wall 12 of the housing 10.

The plurality of vent holes 25 and 30 may be formed around the connection pin through-hole 20. The plurality of vent holes 25 and 30 may include a plurality of first vent holes 25 and a plurality of second vent holes 30 having an inner diameter VD2 whose size is smaller than a size of an inner diameter VD1 of the first vent holes 25.

The size of the inner diameter VD 1 of the first vent holes 25 may be 2 mm, for example, and the size of the inner diameter VD2 of the second vent holes 30 may be 1 mm, for example. The second vent holes 30 may be positioned closer to the connection pin through-hole 20 than the first vent holes 25. In other words, the second vent holes 30 may be positioned closer to the connection pin 140 passing through the connection pin through-hole 20 than the first vent holes 25.

The plurality of first vent holes 25 may be disposed at equal angular intervals while spaced at the same distance from the connection pin through-hole 20. The plurality of second vent holes 30 may be disposed at equal angular intervals while spaced at the same distance from the connection pin through-hole 20. Accordingly, the sum of cross-sectional areas of the plurality of vent holes 25 and 30 may be further increased in a circular region within a predetermined radius from an axis PX that passes through the center of the connection pin through-hole 20 and is parallel to the normal line of the wall 12. Therefore, the release of a gas from the inside of the housing 10 to the outside may be further facilitated.

Also, since gases and particles may be discharged to the outside of the housing 10 through the first vent holes 25 even when the second vent holes 30 are blocked due to particles having a relatively large size, serious accidents such as an explosion of the battery pack 1 caused by blockage of the release of a gas may be prevented.

Meanwhile, the shapes, arrangement, and numbers of the vent holes 25 and 30 illustrated in FIGS. 2, 3, and 8 are only illustrative, and the present invention is not limited thereto. For example, vent holes of three or more different inner diameter sizes may be formed as a plurality of vent holes in the wall, and the plurality of vent holes may be arranged so that a vent hole with a smaller inner diameter size is positioned closer to the connection pin.

The venting device 100 includes a cover 101, a hook 120, and the connection pin 140. The cover 101 is positioned to cover the plurality of vent holes 25 and 30 from the outside of the housing 10. Specifically, the cover 101 is positioned at one side of the wall 12, and by the cover 101 covering the plurality of vent holes 25 and 30, the plurality of vent holes 25 and 30 are covered so as not to be visible from the outside of the housing 10.

The connection pin 140 passes through the wall 12 of the housing 10 through the connection pin through-hole 20. The connection pin 140 extends in a thickness direction of the wall 12. One side of the connection pin 140 is connected to the cover 101, and the other side of the connection pin 140 is connected to the hook 120. The hook 120 is connected to the other side of the connection pin 140 and positioned inside the housing 10 so that the cover 101 and the connection pin 140 are supported by the wall 12 of the housing 10.

The cover 101 may include a central portion 102 and an outer circumferential portion 105. The central portion 102 is coupled to the connection pin 140. The outer circumferential portion 105 may expand radially about the axis PX from the central portion 102. A tip 108 of the outer circumferential portion 105 may come in close contact with an outer surface 13 of the wall 12 of the housing 10 to block movement of a gas through the plurality of vent holes 25 and 30.

The central portion 102 and the outer circumferential portion 105 may be connected without a clear boundary. The tip 108 of the outer circumferential portion 105 may extend along a circular trajectory about the axis PX. The cover 101 may be a plate-shaped member which has a circular shape in a plan view and in which the central portion 102 protrudes to be convex toward the outside of the housing 10 more than the outer circumferential portion 105.

The cover 101 is elastically deformable. When a pressure PI inside the housing 10 in which the plurality of battery cells 5 are disposed (hereinafter referred to as "internal pressure") is higher than a pressure PO outside the housing 10 (hereinafter referred to as "external pressure"), and a pressure difference between the internal pressure PI and the external pressure PO is higher than a cover deformation critical pressure PCC, as illustrated in FIG. 6, the cover 101 may be elastically deformed so that the tip 108 of the outer circumferential portion 105 is spaced from the outer surface 13 of the wall 12 of the housing 10.

When the pressure difference between the internal pressure PI and the external pressure PO is reduced and becomes lower than or equal to the cover deformation critical pressure PCC, the cover 101 may be restored to its original shape illustrated in FIG. 5 due to an elastic restoring force.

The external pressure PO is a pressure of one side of the wall 12 based on the wall 12 and thus may be referred to as "one-side pressure." The internal pressure PI is a pressure of the other side of the wall 12 based on the wall 12 and thus may be referred to as "other-side pressure." The cover 101 may be formed of a metal material such as spring steel.

The connection pin 140 may include a cover coupling portion 141, a hook coupling portion 145, and an intermediate deformation portion 150. The cover coupling portion 141, the hook coupling portion 145, and the intermediate deformation portion 150 may be disposed along the axis PX.

The cover coupling portion 141 may be coupled to the central portion 102 of the cover 101. The hook coupling portion 145 may be coupled to an elastic spoke 121 of the hook 120. The intermediate deformation portion 150 may be positioned between the cover coupling portion 141 and the hook coupling portion 145. One side of the intermediate deformation portion 150 may be coupled to the cover coupling portion 141, and the other side of the intermediate deformation portion 150 may be coupled to the hook coupling portion 145.

The intermediate deformation portion 150 may include a plurality of wires 152 that are bent. The plurality of wires 152 may be elastically deformed in an unbending direction upon receiving a force in a direction in which both ends in the longitudinal direction are pulled and may be restored to its original bent shape when the force is removed. One side end of the plurality of wires 152 may be joined to the cover coupling portion 141, and the other side end of the plurality of wires 152 may be joined to the hook coupling portion 145 by a method such as welding.

The connection pin 140 is elastically deformable. When the internal pressure PI is higher than the external pressure PO, and the pressure difference between the internal pressure PI and the external pressure PO is higher than a connection pin deformation critical pressure PCP, as illustrated in FIG. 5, a length of the connection pin 140 may extend, and the tip 108 of the outer circumferential portion 105 may be spaced from the outer surface 13 of the wall 12 of the housing 10. Specifically, the plurality of wires 152 may be elastically deformed from a bent shape to an unbent shape.

When the pressure difference between the internal pressure PI and the external pressure PO is reduced and becomes lower than or equal to the connection pin deformation critical pressure PCP, the connection pin 140 may be restored to its original shape illustrated in FIG. 4. That is, the plurality of wires 152 may be restored to the bent shape. The connection pin 140 may be formed of a metal material such as spring steel.

The hook 120 may include a plurality of elastic spokes 121. The plurality of elastic spokes 121 may extend radially about the axis PX and may be disposed at equal angular intervals about the axis PX.

One side end 123 of the elastic spoke 121 relatively close to the axis PX is coupled to the hook coupling portion 145 of the connection pin 140, and the other side end 125 of the elastic spoke 121 that is positioned farther from the axis PX than the one side end 123 is in contact with an inner surface 14 of the wall 12 of the housing 10.

When the internal pressure PI is higher than the external pressure PO, and the pressure difference between the internal pressure PI and the external pressure PO is higher than a hook deformation critical pressure PCH, as illustrated in FIG. 7, the hook 120 may be elastically deformed so that the connection pin 140 moves to the outside of the housing 10, that is, the one side of the wall 12, and the tip 108 of the outer circumferential portion 105 of the cover 101 is spaced from the outer surface 13 of the housing 10.

Specifically, as illustrated in FIG. 7, the plurality of elastic spokes 121 open relative to the connection pin 140 so that an angle between the axis PX and the elastic spoke 121 increases, and thus the connection pin 140 moves to the outside of the housing 10.

When the pressure difference between the internal pressure PI and the external pressure PO is reduced and becomes lower than or equal to the hook deformation critical pressure PCH, the hook 120 may be elastically restored to its original shape illustrated in FIG. 6. That is, the plurality of elastic spokes 121 may close relative to the connection pin 140 so that the angle between the axis PX and the elastic spoke 121 decreases, and thus the connection pin 140 may move toward the inside of the housing 10 and move to its original position. The hook 120 may be formed of a metal material such as spring steel.

A plurality of spoke guide grooves 35 recessed to prevent detachment of a tip of the other side end 125 of each of the plurality of elastic spokes 121 may be formed in the inner surface 14 of the wall 12 of the housing 10. The plurality of spoke guide grooves 35 may extend radially about the connection pin 140.

The plurality of spoke guide grooves 35 may extend radially about the axis PX and may be disposed at equal angular intervals about the axis PX. The number of elastic spokes 121 and the number of spoke guide grooves 35 may be the same so that the plurality of elastic spokes 121 correspond one-to-one to the plurality of spoke guide grooves 35.

Due to the plurality of spoke guide grooves 35, when the plurality of elastic spokes 121 are elastically deformed in an opening or closing direction relative to the connection pin 140, the tip 125 of each of the plurality of elastic spokes 121 may smoothly move radially about the axis PX.

In a case where the plurality of spoke guide grooves 35 are not present, when the plurality of elastic spokes 121 open relative to the connection pin 140 due to a difference between the internal pressure PI and the external pressure PO, or the plurality of elastic spokes 121 are elastically restored in the closing direction relative to the connection pin 140 due to a decrease in the difference between the internal pressure PI and the external pressure PO, a degree of opening or closing may be different for each of the plurality of elastic spokes 121, and the connection pin 140 may be tilted within the connection pin through-hole 20.

When the connection pin 140 is tilted within the connection pin through-hole 20, even in a case where the difference between the internal pressure PI and the external pressure PO is not large, one portion of the tip 108 of the outer circumferential portion 105 of the cover 101 may be spaced from the outer surface 13 of the housing 10, and the inner space of the housing 10 may not be sealed.

One side end 37 of each of the spoke guide grooves 35 that is close to the axis PX may be connected to an inner side surface of the connection pin through-hole 20. The other side end 38 of each of the spoke guide grooves 35 that is farther from the axis PX than the one side end 37 may not be connected to the first vent hole 25. However, the shape of the spoke guide grooves 35 illustrated in FIGS. 3 and 8 is only illustrative, and unlike in FIGS. 3 and 8, the one side end of each of the spoke guide grooves may not be connected to the inner side surface of the connection pin through-hole 20, and the other side end of each of the spoke guide grooves may be connected to the first vent hole 25.

The venting device 100 may be easily installed on the wall 12 by a method of pushing the hook 120 into the connection pin through-hole 20 from the outside of the housing 10. When the hook 120 is inserted into the connection pin through-hole 20, the plurality of elastic spokes 121 close so that the tip 125 of each of the plurality of elastic spokes 121 becomes closer to the connection pin 140, and thus the hook 120 passes through the connection pin through-hole 20.

When the plurality of elastic spokes 121 deviate from the connection pin through-hole 20, the plurality of elastic spokes 121 open so that the tip 125 of each of the plurality of elastic spokes 121 becomes farther from the connection pin 140, and thus the hook 120 is not able to pass through the connection pin through-hole 20. As a result, the venting device 100 may be supported so as not to be separated from the housing 10.

In the venting device 100 according to the first embodiment of the present invention, the connection pin deformation critical pressure PCP of the connection pin 140 may be lower than the cover deformation critical pressure PCC of the cover 101, and the hook deformation critical pressure PCH of the hook 120 may be higher than the cover deformation critical pressure PCC of the cover 101. In terms of elastic coefficients, an elastic coefficient of the cover 101 may be higher than an elastic coefficient of the connection pin 140 and lower than an elastic coefficient of the hook 120.

With such a configuration, when, for example, an accident in which an inflammable substance and a gas are released from the battery cell 5 to the inside of the housing 10 occurs, and the difference between the internal pressure PI and the external pressure PO becomes higher than the connection pin deformation critical pressure PCP, as illustrated in FIG. 5, the length of the connection pin 140 may extend for the connection pin 140 to be elastically restorable, and the cover 101 and the hook 120 may not be elastically deformed. Accordingly, the tip 108 of the outer circumferential portion 105 of the cover 101 may be spaced a first distance G1 from the outer surface 13 of the housing 10, and the gas and foreign matter may be discharged from the inside of the housing 10 to the outside.

When the difference between the internal pressure PI and the external pressure PO becomes higher than the cover deformation critical pressure PCC as well as the connection pin deformation critical pressure PCP, as illustrated in FIG. 6, the length of the connection pin 140 may extend for the connection pin 140 to be elastically restorable, and the cover 101 may also be deformed to be elastically restorable, but the hook 120 may not be elastically deformed. Accordingly, the tip 108 of the outer circumferential portion 105 of the cover 101 may be spaced a second distance G2, greater than the first distance G1, from the outer surface 13 of the housing 10, and the gas and foreign matter may be discharged with a higher flow rate from the inside of the housing 10 to the outside, compared to the case of FIG. 5.

When the difference between the internal pressure PI and the external pressure PO becomes higher than the hook deformation critical pressure PCH as well as the connection pin deformation critical pressure PCP and the cover deformation critical pressure PCC, as illustrated in FIG. 7, the length of the connection pin 140 may extend for the connection pin 140 to be elastically restorable, the cover 101 may also be deformed to be elastically restorable, and the hook 120 may also be deformed to be elastically restorable. Accordingly, the tip 108 of the outer circumferential portion 105 of the cover 101 may be spaced a third distance G3, greater than the second distance G2, from the outer surface 13 of the housing 10, and the gas and foreign matter may be discharged with a higher flow rate from the inside of the housing 10 to the outside, compared to the case of FIG. 6.

A distance at which the outer surface 13 of the housing 10 is spaced from the tip 108 of the outer circumferential portion 105 of the cover 101 (hereinafter referred to as "separation distance") may increase with an increase in the difference between the internal pressure PI and the external pressure PO (hereinafter referred to as "pressure difference"). Specifically, the separation distance may slightly increase when the pressure difference increases within a section between the connection pin deformation critical pressure PCP and the cover deformation critical pressure PCC, but the separation distance may significantly increase when the pressure difference exceeds the cover deformation critical pressure PCC.

Also, the separation distance may slightly increase when the pressure difference increases within a section between the cover deformation critical pressure PCC and the hook deformation critical pressure PCH, but the separation distance may significantly increase again when the pressure difference exceeds the hook deformation critical pressure PCH.

Meanwhile, when the difference between the internal pressure PI and the external pressure PO becomes lower than or equal to the connection pin deformation critical pressure PCP due to the release of the pressure from the inside of the housing 10 to the outside, the hook 120, the cover 101, and the connection pin 140 are elastically restored, and as illustrated in FIG. 4, the tip 108 of the outer circumferential portion 105 of the cover 101 comes in close contact with the outer surface 13 of the housing 10 again. Therefore, air outside the housing 10 may not enter the housing 10 through the vent holes 25 and 30.

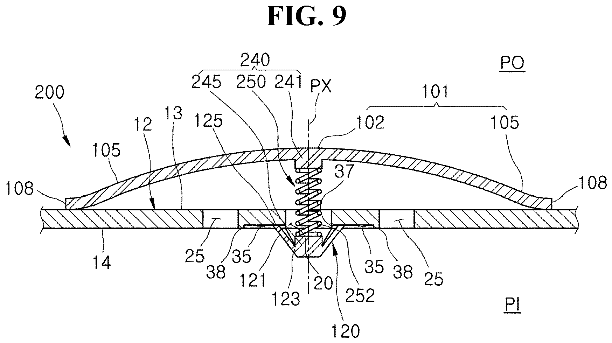

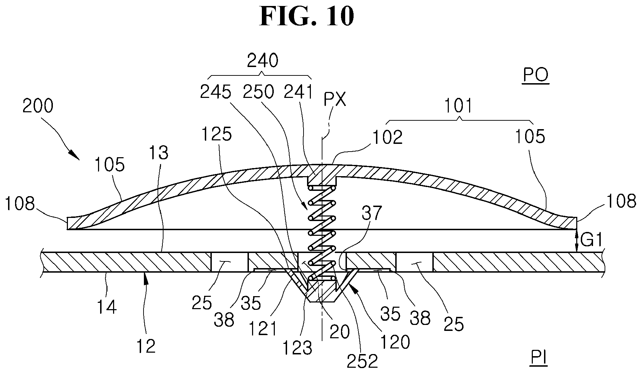

FIG. 9 is a longitudinal cross-sectional view of a venting device according to a second embodiment of the present invention and illustrates a state in which, while the venting device is installed at the wall of the housing of FIG. 1, an outer circumferential portion of a cover is in close contact with the wall of the housing, and FIG. 10 is a longitudinal cross-sectional view of the venting device according to the second embodiment of the present invention and illustrates a state in which, while the venting device is installed at the wall of the housing of FIG. 1, a connection pin is elastically deformed.

Referring to FIGS. 9 and 10, a venting device 200 according to the second embodiment of the present invention includes a cover 101, a hook 120, and a connection pin 240. Here, the cover 101 and the hook 120 are the same as the cover 101 and the hook 120 included in the venting device 100 according to the first embodiment of the present invention described above with reference to FIGS. 1 to 8 and are denoted by the same reference numerals. Therefore, repeated description thereof will be omitted.

The connection pin 240 may include a cover coupling portion 241, a hook coupling portion 245, and an intermediate deformation portion 250. The cover coupling portion 241, the hook coupling portion 245, and the intermediate deformation portion 250 may be disposed along an axis PX.

The cover coupling portion 241 may be coupled to a central portion 102 of the cover 101. The hook coupling portion 245 may be coupled to an elastic spoke 121 of the hook 120. The intermediate deformation portion 250 may be positioned between the cover coupling portion 241 and the hook coupling portion 245. One side of the intermediate deformation portion 250 may be coupled to the cover coupling portion 241, and the other side of the intermediate deformation portion 250 may be coupled to the hook coupling portion 245.

The intermediate deformation portion 250 may include a coil spring 252. The coil spring 252 may extend toward the axis PX upon receiving a force in a direction in which both ends along the axis PX are pulled and may be elastically restored to its original contracted shape when the force is removed. One side end of the coil spring 252 may be joined to the cover coupling portion 241, and the other side end of the coil spring 252 may be joined to the hook coupling portion 245 by a method such as welding.

The connection pin 240 is elastically deformable. When the internal pressure PI is higher than the external pressure PO, and the pressure difference between the internal pressure PI and the external pressure PO is higher than the connection pin deformation critical pressure PCP, as illustrated in FIG. 10, a length of the connection pin 240 may extend, and the tip 108 of the outer circumferential portion 105 may be spaced from the outer surface 13 of the wall 12 of the housing 10. Specifically, the coil spring 252 may be elastically deformed in a direction in which a length of the coil spring 252 increases along the axis PX.

When the pressure difference between the internal pressure PI and the external pressure PO is reduced and becomes lower than or equal to the connection pin deformation critical pressure PCP, the connection pin 240 may be restored to its original shape illustrated in FIG. 9. That is, the coil spring 252 may be restored in a direction in which the length of the coil spring 252 decreases along the axis PX. The connection pin 240 may be formed of a metal material such as spring steel.

The venting devices 100 and 200 described above are elastically deformed and allow a gas to be released to the outside of the battery pack 1 in response to an increase in the pressure inside the battery pack 1, that is, the internal pressure of the housing 10, and are elastically restored and prevent outside air from entering the battery pack 1 in response to a decrease in the pressure inside the battery pack 1 that is caused by the release of the gas. Therefore, a thermal runaway phenomenon in which fire inside the battery pack 1 expands due to air entering the battery pack 1 from outside the battery pack 1 is prevented.

In the venting devices 100 and 200, a range in which elastic restoration is possible for a separation distance between the housing 10 and the cover 101 of the battery pack 1 may be significantly expanded. Therefore, even in a case where a pressure difference between the internal pressure and the external pressure of the battery pack 1 sharply increases, the cover 101 may widely open to allow a gas to be rapidly discharged from the inside of the battery pack 1 to the outside, and when the pressure difference between the internal pressure and the external pressure of the battery pack 1 decreases, the cover 101 may be reliably closed to prevent the thermal runaway phenomenon.

Meanwhile, it has been described above that, in the venting devices 100 and 200 according to the first embodiment and the second embodiment of the present invention, the connection pin deformation critical pressure PCP is lower than the cover deformation critical pressure PCC, and the hook deformation critical pressure PCH is higher than the cover deformation critical pressure PCC, but such relations are only illustrative. For example, the elastic coefficients of the cover, the hook, and the connection pin may be set so that the cover deformation critical pressure is higher than the hook deformation critical pressure, and the hook deformation critical pressure is higher than the connection pin deformation critical pressure.

A venting device of the present invention is elastically deformed and allows a gas to be released to the outside of a battery pack in response to an increase in a pressure inside the battery pack and is elastically restored and prevents outside air from entering the battery pack in response to a decrease in the pressure inside the battery pack that is caused by the release of the gas. Therefore, a thermal runaway phenomenon in which fire inside a battery pack expands due to air entering the battery pack from outside the battery pack is prevented.

In a venting device according to an embodiment of the present invention that includes an elastically deformable cover, an elastically deformable hook, and an elastically deformable connection pin, a range in which elastic restoration is possible for a separation distance between a housing and a cover of a battery pack can be significantly expanded. Therefore, even in a case where a pressure difference between an internal pressure and an external pressure of the battery pack sharply increases, the cover can widely open to allow a gas to be rapidly discharged from the inside of the battery pack to the outside, and when the pressure difference between the internal pressure and the external pressure of the battery pack decreases, the cover can be reliably closed to prevent the thermal runaway phenomenon.

However, the effects obtainable through the present disclosure are not limited to the above effects, and other technical effects that are not mentioned will be clearly understood by those skilled in the art from the following description of the present disclosure.

Although the present invention has been described with reference to embodiments and drawings illustrating aspects thereof, the present invention is not limited thereto. Various modifications and variations can be made by a person skilled in the art to which the present invention belongs within the scope of the present invention and the claims and equivalents thereto.

Embodiments are set out in the following clauses:
Clause 1. A venting device, comprising:
   a cover positioned at one side of a wall, the wall having a vent hole through which a gas is flowable, and the cover covering the vent hole;
   a connection pin connected to the cover, the connection pin being configured to pass through the wall; and
   a hook connected to the connection pin, the connection pin being between the hook and the cover, and the hook being configured to pass through the wall to be positioned at the other side of the wall and to anchor the cover and the connection pin to the wall.
Clause 2. The venting device of clause 1, wherein the cover includes:
   a central portion coupled to the connection pin; and
   an outer circumferential portion expanding radially from the central portion, the outer circumferential portion being configured to contact the one side of the wall to block movement of the gas through the vent hole.
Clause 3. The venting device of clause 2, wherein, in a case where pressure at the other side of the wall is higher than pressure at the one side of the wall, and a pressure difference between the one side of the wall and the other side of the wall is greater than a cover deformation critical pressure, the cover is elastically deformed so that the outer circumferential portion is spaced from the one side of the wall.
Clause 4. The venting device of clause 2 or clause 3, wherein, in a case where pressure at the other side of the wall is higher than pressure at the one side of the wall, and a pressure difference between the one side of the wall and the other side of the wall is greater than a hook deformation critical pressure, the hook is elastically deformed so that the connection pin moves to the one side of the wall and the outer circumferential portion of the cover is spaced from the one side of the wall.
Clause 5. The venting device of any one of clauses 2 to 4, wherein, in a case where pressure at the other side of the wall is higher than pressure at the one side of the wall, and a pressure difference between the one side of the wall and the other side of the wall is greater than a connection pin deformation critical pressure, the connection pin is elastically deformed so that a length of the connection pin extends and the outer circumferential portion of the cover is spaced from the one side of the wall.
Clause 6. The venting device of clause 5, wherein the connection pin includes:
   a cover coupling portion coupled to the cover;
   a hook coupling portion coupled to the hook; and
   an intermediate deformation portion positioned between the cover coupling portion and the hook coupling portion, the intermediate deformation portion having a first side coupled to the cover coupling portion and a second side coupled to the hook coupling portion.
Clause 7. The venting device of clause 6, wherein the intermediate deformation portion includes a plurality of wires bent to be elastically deformable in an unbending direction.
Clause 8. The venting device of clause 6, wherein the intermediate deformation portion includes a coil spring.
Clause 9. A battery pack, comprising:
   a housing including sidewalls defining an inner space and at least one vent hole through one of the sidewalls, a gas being flowable through the at least one vent hole;
   at least one battery cell accommodated in the inner space of the housing; and
   a venting device on the one of the sidewalls, the venting device including:
      a cover on an external surface of the one of the sidewalls and covering the at least one vent hole,
      a connection pin passing through the housing, the connection pin including a first side connected to the cover, and
      a hook positioned at an inner surface of the one of the sidewalls and connected to a second side of the connection pin, the hook being configured to anchor the cover and the connection pin to the housing.
Clause 10. The battery pack of clause 9, wherein the cover includes:
   a central portion coupled to the connection pin; and
   an outer circumferential portion expanding radially from the central portion, the outer circumferential portion being configured to contact an outer surface of the housing to block movement of the gas through the at least one vent hole.
Clause 11. The battery pack of clause 10, wherein, in a case where an internal pressure of the housing is higher than an external pressure of the housing, and a pressure difference between the internal pressure and the external pressure is greater than a cover deformation critical pressure, the cover is elastically deformed so that the outer circumferential portion is spaced from the outer surface of the housing.
Clause 12. The battery pack of clause 11, wherein a separation distance between the outer surface and the outer circumferential portion increases with an increase in the difference between the internal pressure and the external pressure.
Clause 13. The battery pack of clause 10, wherein, in a case where an internal pressure of the housing is higher than an external pressure of the housing, and a pressure difference between the internal pressure and the external pressure is greater than a hook deformation critical pressure, the hook is elastically deformed so that the connection pin moves to the outer side of the housing and the outer circumferential portion of the cover is spaced from the outer surface of the housing.
Clause 14. The battery pack of clause 13, wherein:
   in a case where the pressure difference between the internal pressure and the external pressure is greater than the cover deformation critical pressure, the cover is elastically deformed so that the outer circumferential portion is spaced from the outer surface of the housing; and
   the hook deformation critical pressure is higher than the cover deformation critical pressure.
Clause 15. The battery pack of clause 13 or clause 14, wherein the hook includes a plurality of elastic spokes, each of the plurality of elastic spokes having one side coupled to the connection pin and another side in contact with an inner surface of the housing.
Clause 16. The battery pack of clause 15, wherein the housing further includes a plurality of spoke guide grooves recessed on the inner surface of the housing, the plurality of spoke guide grooves extending radially about the connection pin, and the plurality of spoke guide grooves being configured to accommodate the plurality of elastic spokes, respectively, and to prevent detachment of a tip of each of the plurality of elastic spokes.
Clause 17. The battery pack of any one of clauses 10 to 16, wherein, in a case where an internal pressure of the housing is higher than an external pressure of the housing, and a pressure difference between the internal pressure and the external pressure is greater than a connection pin deformation critical pressure, the connection pin is elastically deformed so that a length of the connection pin extends and the outer circumferential portion of the cover is spaced from the outer surface of the housing.
Clause 18. The battery pack of clause 17, wherein:
   in a case where the pressure difference between the internal pressure and the external pressure is greater than the cover deformation critical pressure, the cover is elastically deformed so that the outer circumferential portion is spaced from the outer surface of the housing; and
   the connection pin deformation critical pressure is lower than the cover deformation critical pressure.
Clause 19. The battery pack of any one of clauses 9 to 18, wherein the at least one vent hole includes first vent holes and second vent holes, inner diameters of the first vent holes being smaller than inner diameters of the second vent holes, and a distance between the first vent holes and the connection pin being smaller than a distance between the second vent holes and the connection pin.
Clause 20. The battery pack of any one of clauses 9 to 19, wherein an elastic coefficient of the cover is higher than an elastic coefficient of the connection pin and lower than an elastic coefficient of the hook.

## Claims

1. A venting device comprising:
a cover positioned at one side of a wall having a vent hole, through which a gas is able to move, formed therein to cover the vent hole;
a connection pin configured to pass through the wall and have one side connected to the cover; and
a hook positioned at the other side of the wall and connected to the other side of the connection pin so that the cover and the connection pin are supported by the wall.

2. The venting device of claim 1, wherein the cover comprises:
a central portion coupled to the connection pin; and
an outer circumferential portion configured to expand radially from the central portion and come in close contact with one side surface of the wall to block movement of the gas through the vent hole.

3. The venting device of claim 2, wherein, in a case where other-side pressure of the other side of the wall is higher than one-side pressure of the one side of the wall, and a pressure difference between the other-side pressure and the one-side pressure is greater than a cover deformation critical pressure, the cover is elastically deformed so that the outer circumferential portion is spaced from the one side surface of the wall.

4. The venting device of claim 2 or claim 3, wherein, in a case where the other-side pressure of the other side of the wall is higher than the one-side pressure of the one side of the wall, and the pressure difference between the other-side pressure and the one-side pressure is greater than a hook deformation critical pressure, the hook is elastically deformed so that the connection pin moves to the one side of the wall and the outer circumferential portion of the cover is spaced from the one side surface of the wall.

5. The venting device of any one of claims 2 to 4, wherein, in a case where the other-side pressure of the other side of the wall is higher than the one-side pressure of the one side of the wall, and the pressure difference between the other-side pressure and the one-side pressure is greater than a connection pin deformation critical pressure, the connection pin is elastically deformed so that a length of the connection pin extends and the outer circumferential portion of the cover is spaced from the one side surface of the wall.

6. The venting device of claim 5, wherein the connection pin comprises
a cover coupling portion coupled to the cover;
a hook coupling portion coupled to the hook; and
an intermediate deformation portion positioned between the cover coupling portion and the hook coupling portion and having one side coupled to the cover coupling portion and the other side coupled to the hook coupling portion.

7. A battery pack comprising:
a housing configured to limit an inner space and having a vent hole, through which a gas is able to move, formed therein;
at least one battery cell accommodated in the inner space; and
a venting device comprising a cover positioned to cover the vent hole from an outer side of the housing, a connection pin configured to pass through the housing and have one side connected to the cover, and a hook positioned at an inner side of the housing and connected to the other side of the connection pin so that the cover and the connection pin are supported by the housing.

8. The battery pack of claim 7, wherein the cover comprises:
a central portion coupled to the connection pin; and
an outer circumferential portion configured to expand radially from the central portion and come in close contact with an outer surface of the housing to block movement of the gas through the vent hole.

9. The battery pack of claim 8, wherein, in a case where an internal pressure of the inner side of the housing is higher than an external pressure of the outer side of the housing, and a pressure difference between the internal pressure and the external pressure is greater than a cover deformation critical pressure, the cover is elastically deformed so that the outer circumferential portion is spaced from the outer surface of the housing.

10. The battery pack of claim 8, wherein, in a case where the internal pressure of the inner side of the housing is higher than an external pressure of the outer side of the housing, and a pressure difference between the internal pressure and the external pressure is greater than a hook deformation critical pressure, the hook is elastically deformed so that the connection pin moves to the outer side of the housing and the outer circumferential portion of the cover is spaced from the outer surface of the housing.

11. The battery pack of claim 10, wherein:
in a case where the internal pressure is higher than the external pressure, and the pressure difference between the internal pressure and the external pressure is greater than the cover deformation critical pressure, the cover is elastically deformed so that the outer circumferential portion is spaced from the outer surface of the housing; and
the hook deformation critical pressure is higher than the cover deformation critical pressure.

12. The battery pack of claim 10 or claim 11, wherein the hook comprises a plurality of elastic spokes each having one side coupled to the connection pin and the other side in contact with an inner surface of the housing.

13. The battery pack of any one of claims 8 to 12, wherein, in a case where the internal pressure of the inner side of the housing is higher than the external pressure of the outer side of the housing, and the pressure difference between the internal pressure and the external pressure is greater than a connection pin deformation critical pressure, the connection pin is elastically deformed so that a length of the connection pin extends and the outer circumferential portion of the cover is spaced from the outer surface of the housing.

14. The battery pack of any one of claims 7 to 13, wherein:
the vent hole is provided as a plurality of vent holes; and
the plurality of vent holes are arranged so that a vent hole with a smaller inner diameter size is positioned closer to the connection pin.

15. The battery pack of any one of claims 7 to 14, wherein an elastic coefficient of the cover is higher than an elastic coefficient of the connection pin and lower than an elastic coefficient of the hook.
